# EUROPEAN PATENT APPLICATION

(11) **EP 4 756 957 A1**
(43) Date of publication of application: **10.06.2026**
(21) Application number: 24849031.0
(22) Date of filing: 24.07.2024
(51) Int. Cl.: H01M 10/05, H01M 4/13, H01M 4/38, H01M 4/62, H01M 10/0562

(54) **FLUORIDE ION SECONDARY BATTERY**

(30) Priority: 31.07.2023 JP 2023124987
(71) Applicant: Panasonic Energy Co., Ltd., Moriguchi-shi, Osaka 570-8511 (JP)
(72) Inventor: SHIBUTANI, Satoshi, Kadoma-shi, Osaka 571-0057 (JP)
(74) Representative: Novagraaf International SA
(86) International application number: PCT/JP2024/026527
(87) International publication number: WO 2025/028376

(57) **Abstract**

The fluoride ion secondary battery 10 of the present disclosure includes a positive electrode 2, a negative electrode 4, and an electrolyte 3 disposed between the positive electrode 2 and the negative electrode 4. The negative electrode 4 includes a negative electrode active material and a fibrous carbon material, and the potential of the negative electrode 4 at the end of charge is more negative than -2.5 V vs. a standard hydrogen electrode. The fibrous carbon material may include a carbon nanotube.

## Description

### TECHNICAL FIELD

The present invention relates to a fluoride ion secondary battery.

### BACKGROUND ART

Fluoride ion secondary batteries are regarded as promising batteries with higher energy density than lithium ion secondary batteries, and thus, research on such batteries is progressing.

Patent Literature 1 describes a fluoride ion secondary battery using LaF₃ as a negative electrode active material. Patent Literature 2 describes a fluoride ion secondary battery using AlF₃ as a negative electrode active material.

### CITATION LIST

### Patent Literatures

Patent Literature 1: JP 2017-84506 A
Patent Literature 2: WO 2019/187943 A1

### SUMMARY OF INVENTION

### Technical Problem

One problem for conventional fluoride ion secondary batteries is that the initial discharge capacity is insufficient.

### Solution to Problem

The present disclosure provides a fluoride ion secondary battery including:
a positive electrode;
a negative electrode; and
an electrolyte disposed between the positive electrode and the negative electrode, wherein
the negative electrode includes a negative electrode active material and a fibrous carbon material, and
a potential of the negative electrode at an end of charge is more negative than -2.5 V vs. a standard hydrogen electrode.

### Advantageous Effects of Invention

According to the technique of the present disclosure, the initial discharge capacity of a fluoride ion secondary battery can be increased.

### BRIEF DESCRIPTION OF DRAWINGS

FIG. 1A is a schematic cross-sectional view of a fluoride ion secondary battery according to a first embodiment of the present disclosure.
FIG. 1B is a schematic cross-sectional view of a fluoride ion secondary battery according to a variation.
FIG. 2A is a graph showing a charge and discharge curve for the first cycle of a fluoride ion secondary battery of Example 1.
FIG. 2B is a graph showing a charge and discharge curve for the first cycle of a fluoride ion secondary battery of Example 2.
FIG. 2C is a graph showing a charge and discharge curve for the first cycle of a fluoride ion secondary battery of Comparative Example 1.
FIG. 3A is a graph showing a charge and discharge curve for the first cycle of a fluoride ion secondary battery of Example 3.
FIG. 3B is a graph showing a charge and discharge curve for the first cycle of a fluoride ion secondary battery of Example 4.
FIG. 3C is a graph showing a charge and discharge curve for the first cycle of a fluoride ion secondary battery of Comparative Example 2.
FIG. 4A is a graph showing a charge and discharge curve for the first cycle of a fluoride ion secondary battery of Example 5.
FIG. 4B is a graph showing a charge and discharge curve for the first cycle of a fluoride ion secondary battery of Example 6.
FIG. 4C is a graph showing a charge and discharge curve for the first cycle of a fluoride ion secondary battery of Comparative Example 3.

### DESCRIPTION OF EMBODIMENTS

### (Findings on which the present disclosure is based)

For achieving high energy density, it is advantageous that a difference in potential between the positive electrode and negative electrode is large. The present inventor produced fluoride ion secondary batteries by use of various negative electrode active materials, and investigated their charge and discharge characteristics. As a result, it was found that when the potential of the negative electrode at the end of charge is sufficiently negative, the initial discharge capacity may significantly fall below the value predicted from the theoretical capacity. Through intensive investigation, it was further found that the initial discharge capacity is also influenced by the type of electroconductive additive. When the potential of the negative electrode at the end of charge was more positive, no tendency for the initial discharge capacity to depend on the type of electroconductive additive was observed. Based on these findings, the present inventor completed the technique disclosed herein.

Embodiments of the present disclosure will now be described with reference to the attached drawings. The present disclosure is not limited to the following embodiments.

### (First embodiment)

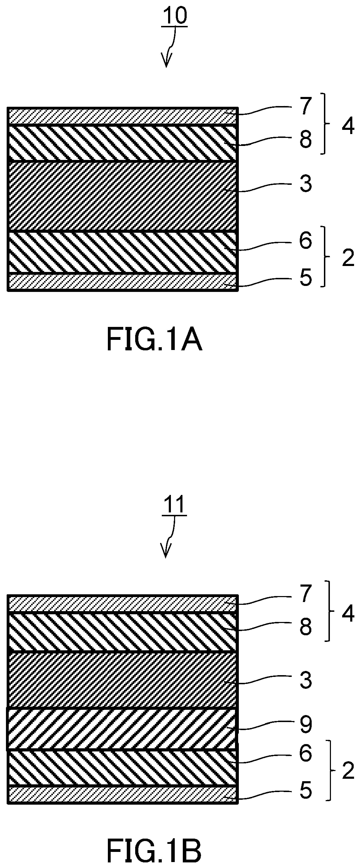

FIG. 1A is a cross-sectional view of a fluoride ion secondary battery 10 according to a first embodiment of the present disclosure. The fluoride ion secondary battery 10 includes a positive electrode 2, a negative electrode 4, and an electrolyte layer 3. The positive electrode 2 has a positive electrode current collector 5 and a positive electrode active material layer 6. The positive electrode active material layer 6 is disposed on the positive electrode current collector 5. The negative electrode 4 has a negative electrode current collector 7 and a negative electrode active material layer 8. The negative electrode active material layer 8 is disposed on the negative electrode current collector 7. The electrolyte layer 3 is disposed between the positive electrode 2 and the negative electrode 4. The positive electrode 2 and the negative electrode 4 face each other across the electrolyte layer 3.

In charging the fluoride ion secondary battery 10, fluoride ions (F⁻) migrate from the negative electrode 4 to the positive electrode 2. A defluorination reaction occurs at the negative electrode 4, while a fluorination reaction occurs at the positive electrode 2. In discharging the fluoride ion secondary battery 10, the fluoride ions migrate from the positive electrode 2 to the negative electrode 4. A fluorination reaction occurs at the negative electrode 4, while a defluorination reaction occurs at the positive electrode 2.

The fluorination reaction and the defluorination reaction include both forms involving chemical reactions between the active material and the fluoride ion, and forms not involving chemical reactions, such as intercalation. The chemical reactions include a reaction to form a compound and a reaction to form a composite not being a compound. Examples of the composite not being a compound include alloys and solid solutions.

The positive electrode current collector 5 is made of a metal material such as copper, chromium, nickel, titanium, platinum, gold, aluminum, tungsten, iron, molybdenum, zirconium, or an alloy containing at least one of these metal materials. In one example, the positive electrode current collector 5 is an aluminum foil coated with a carbon material.

The positive electrode active material layer 6 includes a positive electrode active material. As the positive electrode active material, a material capable of occluding and releasing fluoride ions in association with charge and discharge of the fluoride ion secondary battery 10 is used. The positive electrode active material includes, for example, at least one element selected from the group consisting of Co, Cu, Bi, Sn, Pb, Fe, Zn, Ga and C. The positive electrode active material may be a simple substance of an element selected from the group, an alloy containing at least one element selected from the group, a solid solution containing at least one element selected from the group, or a compound containing at least one element selected from the group. The compound may be, for example, a fluoride.

The positive electrode active material may be in the form of particles. Examples of the form of particles include spherical, elliptical, flake-like, and fibrous. The particles of the positive electrode active material may have a median diameter (D50) of, for example, 0.2 µm or more and 5.0 µm or less. The median diameter is determined from the volume-based particle size distribution obtained by laser diffraction scattering.

The positive electrode active material layer 6 may also include other materials such as a solid electrolyte, an electroconductive additive, or a binder.

The solid electrolyte may be an electrolyte having fluoride ion conductivity. As a solid electrolyte having fluoride ion conductivity, BaₓCa_{y}F_{z} (0.3 < x < 0.7, 0.3 < y < 0.7, 1.5 < z < 2.5), and CeₓSr_{y}F_{z} (0.9 < x < 1, 0 < y < 0.1, 2 < z < 3) or the like may be used. BaₓCa_{y}F_{z} and CeₓSr_{y}F_{z} are suitable for the fluoride ion secondary battery 10 of the present embodiment because both of them have high fluoride ion conductivity.

Examples of electroconductive additives include carbon materials such as acetylene black and a carbon nanotube.

As a binder, polymer materials known in the field of battery may be used.

The negative electrode current collector 7 is made of a metal material such as copper, chromium, nickel, titanium, platinum, gold, aluminum, tungsten, iron, molybdenum, zirconium, or an alloy containing at least one thereof. In one example, the negative electrode current collector 7 is an aluminum foil coated with a carbon material.

The negative electrode active material layer 8 includes a negative electrode active material and a fibrous carbon material. As the negative electrode active material, a material capable of occluding and releasing fluoride ions in association with charge and discharge of the fluoride ion secondary battery 10 is used. The potential of the negative electrode 4 at the end of charge is more negative than -2.5 V vs. a standard hydrogen electrode. This configuration allows for a large difference in potential between the positive electrode 2 and the negative electrode 4, enabling provision of a fluoride ion secondary battery 10 with high energy density. The fibrous carbon material suppresses side reactions that may occur at the negative electrode 4 during charge of the fluoride ion secondary battery 10. Suppressing these side reactions can increase the initial discharge capacity of the fluoride ion secondary battery 10. While the exact reason the fibrous carbon material is capable of suppressing side reactions is not entirely clear, it is presumed that the chemical stability of the fibrous carbon material contributes to the suppression of the side reactions. "End of charge" is defined by a control circuit that controls the charge and discharge of the fluoride ion secondary battery 10, depending on the type of the negative electrode active material and the type of the positive electrode active material. The present disclosure can provide an electricity storage system including the fluoride ion secondary battery 10 and the control circuit.

The potential of the negative electrode 4 at the end of charge may be a potential more negative than -3.082 V vs. a standard hydrogen electrode. When the potential of the negative electrode 4 at the end of charge is more negative, the side reactions are more likely to occur. In such cases, the technique of the present disclosure is particularly effective.

The negative electrode active material may be a material whose redox equilibrium potential between a fluorination reaction and a defluorination reaction is more negative than -2.5 V vs. the standard hydrogen electrode, or even more negative than -3.082 V.

The negative electrode active material may contain at least one element selected from the group consisting of lanthanum, cerium, magnesium, sodium, and yttrium. More specifically, the negative electrode active material may be a fluoride containing at least one element selected from this group of metal elements. Such a configuration enables to provide a fluoride ion secondary battery 10 with high energy density.

The negative electrode active material may be in the form of particles. The median diameter (D50) of particles of the negative electrode active material is desirably 7.0 µm or less, more desirably 5.0 µm or less, and further desirably 2.0 µm or less. When the upper limit of the median diameter is smaller, the fluorination reaction of a metal as the negative electrode active material proceeds further during discharge, thereby suppressing the decrease in the initial discharge capacity. The lower limit of the median diameter is, for example, 0.1 µm.

Examples of the fibrous carbon material include a solid carbon fiber and a carbon nanotube. Among these, the carbon nanotube is considered particularly effective at suppressing side reactions and is therefore suitable for the fluoride ion secondary battery 10 in the present embodiment.

The carbon nanotubes may be a single-walled carbon nanotube, a multi-walled carbon nanotube, or a mixture thereof. The single-walled carbon nanotube is a carbon nanotube formed of a single layer of graphene. The multi-walled carbon nanotube is a carbon nanotube having a structure including a plurality of layered tubes formed of graphene. Due to the high effectiveness in suppressing side reactions, the single-walled carbon nanotube is suitable for the fluoride ion secondary battery 10 in the present embodiment.

Observation of carbon nanotubes using a transmission electron microscope makes it possible to distinguish between a single-walled carbon nanotube and a multi-walled carbon nanotube.

The average diameter of the single-walled carbon nanotube is desirably 1 nm or more and 7 nm or less, and more desirably 3 nm or more and 5 nm or less. The average diameter of the multi-walled carbon nanotube is 300 nm or more and 500 nm or less. The average length of the fibrous carbon material is, for example, 100 µm or more and 600 µm or less. The average diameter and the average length are the average values of the diameters and lengths of a plurality of (for example, 10) fibrous carbon materials. The diameter and the length of the fibrous carbon material may be the values measured for an electron microscopic image of the fibrous carbon material.

In the present embodiment, a ratio M2/M1, expressed as a percentage, of mass M2 of the negative electrode active material to mass M1 of the negative electrode active material layer 8 is desirably 40 mass% or more and 80 mass% or less, more desirably 40 mass% or more and 70 mass% or less, and further desirably 50 mass% or more and 60 mass% or less. A ratio M3/M1, expressed as a percentage, of mass M3 of the fibrous carbon material to the mass M1 of the negative electrode active material layer 8 is desirably 0.5 mass% or more and 15 mass% or less, more desirably 6 mass% or more and 12 mass% or less, and further desirably 8 mass% or more and 10 mass% or less. By appropriately adjusting the ratio M2/M1 and the ratio M3/M1, the effect of suppressing side reactions is enhanced.

In analyzing the fibrous carbon material by Raman spectroscopy, a ratio I_{G}/I_{D} of an intensity I_{G} of a G band to an intensity I_{D} of a D band may be 1.1 or more. The D band is a peak appearing around 1360 cm⁻¹ in the Raman spectrum of the fibrous carbon material, associated with disorder and defects in the graphite structure. The G band is a peak appearing around 1580 cm⁻¹ in the Raman spectrum of the fibrous carbon material, originating from graphite. The ratio I_{G}/I_{D} serves as an indicator of the defect quantity in the fibrous carbon material. A large ratio I_{G}/I_{D} indicates that the fibrous carbon material has few defects. A small ratio I_{G}/I_{D} indicates that the fibrous carbon material has many defects. A fibrous carbon material having fewer defects is considered to exhibit high chemical stability. It is expected that when the chemical stability of the fibrous carbon material is higher, the effect of suppressing side reactions is enhanced. The upper limit of the ratio I_{G}/I_{D} is not specifically limited and is, for example, 100.

The negative electrode active material layer 8 may also include other materials such as a solid electrolyte and a binder. As the solid electrolyte, materials described above as applicable to the positive electrode active material layer 6 may be used. As the binder, polymer materials known in the field of battery may be used. The negative electrode active material layer 8 may also include an electroconductive additive other than the fibrous carbon material.

The negative electrode active material layer 8 of the present embodiment may include an electrolyte having fluoride ion conductivity. The electrolyte is typically a solid electrolyte. As a solid electrolyte having fluoride ion conductivity, at least one selected from the group consisting of BaₓCa_{y}F_{z} (0.3 < x < 0.7, 0.3 < y < 0.7, 1.5 < z < 2.5) and CeₓSr_{y}F_{z} (0.9 < x <1, 0 < y < 0.1, 2 < z < 3) may be used. BaₓCa_{y}F_{z} and CeₓSr_{y}F_{z} are suitable for the fluoride ion secondary battery 10 of the present embodiment because both of them have high fluoride ion conductivity.

In the present embodiment, a ratio M4/M1, expressed as a percentage, of mass M4 of the electrolyte to the mass M1 of the negative electrode active material layer 8 is, for example, 24 mass% or more and 48 mass% or less.

The electrolyte layer 3 includes a material having fluoride ion conductivity. The electrolyte layer 3 may be formed of, for example, a solid electrolyte described above as a material applicable to the positive electrode active material layer 6.

In the example shown in FIG. 1A, the fluoride ion secondary battery 10 is a solid-state battery. Alternatively, the fluoride ion secondary battery 10 may be a battery using an electrolyte solution.

In the case where the fluoride ion secondary battery 10 is a battery using an electrolyte solution, the electrolyte layer 3 may be formed of a resin porous membrane, such as a porous membrane of polyolefin. The positive electrode active material layer 6, the negative electrode active material layer 8, and the electrolyte layer 3 are impregnated with the electrolyte solution.

The electrolyte solution includes a solvent and an electrolyte salt.

The solvent is, for example, a non-aqueous solvent. Examples of the non-aqueous solvent include a cyclic ether, a chain ether, a cyclic carbonate ester, a chain carbonate ester, a cyclic carboxylic acid ester, and a chain carboxylic acid ester.

Examples of the cyclic ether include 4-methyl-1,3-dioxolane, 2-methyltetrahydrofuran, and a crown ether. Examples of the chain ether include 1,2-dimethoxyethane, ethylene glycol dimethyl ether, diethylene glycol dimethyl ether, triethylene glycol dimethyl ether, and tetraethylene glycol dimethyl ether. Examples of the cyclic carbonate ester include ethylene carbonate, propylene carbonate, butylene carbonate, fluoroethylene carbonate, and 4,5-difluoroethylene carbonate. Examples of the chain carbonate ester include dimethyl carbonate, ethyl methyl carbonate, and diethyl carbonate. An example of the cyclic carboxylic acid ester is γ-butyrolactone. Examples of the chain carboxylic acid ester include ethyl acetate, propyl acetate, and butyl acetate. One or a mixture of at least two selected from these materials may be used as the non-aqueous solvent.

Examples of the electrolyte salt include an inorganic fluoride salt, an organic fluoride salt, and an ionic liquid.

Examples of the inorganic fluoride salt include lithium fluoride, sodium fluoride, potassium fluoride, rubidium fluoride, cesium fluoride, and ammonium fluoride. Examples of the organic fluoride salt include tetramethylammonium fluoride, neopentyltrimethylammonium fluoride, trineopentylmethylammonium fluoride, tetraneopentylammonium fluoride, 1,3,3,6,6-hexamethylpiperidinium fluoride, 1-methyl-1-propylpiperidinium fluoride, tetramethylphosphonium fluoride, tetraphenylphosphonium fluoride, and trimethylsulfonium fluoride.

Examples of cation of the ionic liquid include 1-ethyl-3-methylimidazolium cation, 1-ethylpyridinium cation, 1-methoxyethyl-1-methylpyrrolidinium cation, N-methyl-N-propylpiperidinium cation, trimethylbutylammonium cation, N,N-diethyl-N-methylmethoxyethylammonium cation, tetrabutylphosphonium cation, triethyl-(2-methoxyethyl)phosphonium cation, triethylsulfonium cation, and diethyl-(2-methoxyethyl)sulfonium cation.

Examples of anion of the ionic liquid include bis(fluorosulfonyl)amide anion, bis(trifluoromethanesulfonyl)amide anion, hexafluorophosphate anion, tris(pentafluoroethyl)trifluorophosphate anion, trifluoromethanesulfonate anion, and tetrafluoroborate anion.

One or a mixture of at least two selected from these materials may be used as the electrolyte salt.

FIG. 1B is a schematic cross-sectional view of a fluoride ion secondary battery according to a variation. A fluoride ion secondary battery 11 further includes a positive electrode buffer layer 9 in addition to the fluoride ion secondary battery 10 described with reference to FIG. 1A. The positive electrode buffer layer 9 is disposed between an electrolyte layer 3 and a positive electrode active material layer 6.

The positive electrode buffer layer 9 is a layer including a positive electrode buffer material. The positive electrode buffer material is, for example, a compound containing the same metal element as the metal contained in the positive electrode active material. With this configuration, the cycle characteristics of the fluoride ion secondary battery 11 can be improved. For example, in the case where the positive electrode active material is lead, the positive electrode buffer material may be Pb₁₋ₐSnₐF₂. Here, the 'a' may satisfy, for example, 0 ≤ a ≤ 1, or may satisfy 0 < a < 1.

### (Other embodiments)

### (Addendum)

The above description of the embodiments discloses the following techniques.

### (Technique 1)

A fluoride ion secondary battery, including:
a positive electrode;
a negative electrode; and
an electrolyte disposed between the positive electrode and the negative electrode, wherein
the negative electrode includes a negative electrode active material and a fibrous carbon material, and
a potential of the negative electrode at an end of charge is more negative than -2.5 V vs. a standard hydrogen electrode.

According to the technique of the present disclosure, the initial discharge capacity of a fluoride ion secondary battery can be increased.

### (Technique 2)

The fluoride ion secondary battery according to Technique 1, wherein the fibrous carbon material includes a carbon nanotube. The carbon nanotube, being considered as readily exhibiting an effect of suppressing side reactions, is suitable for the fluoride ion secondary battery of the present disclosure.

### (Technique 3)

The fluoride ion secondary battery according to Technique 2, wherein the carbon nanotube includes a single-walled carbon nanotube. The single-walled carbon nanotube is suitable for the fluoride ion secondary battery of the present disclosure, because of its effect of suppressing side reactions.

### (Technique 4)

The fluoride ion secondary battery according to any one of Techniques 1 to 3, wherein the potential of the negative electrode at an end of charge is more negative than -3.082 V vs. a standard hydrogen electrode. It is considered that when the potential of the negative electrode at the end of charge is more negative, the side reactions are more likely to occur. In such cases, the technique of the present disclosure is particularly effective.

### (Technique 5)

The fluoride ion secondary battery according to any one of Techniques 1 to 4, wherein in analyzing the fibrous carbon material by Raman spectroscopy, a ratio of an intensity I_{G} of a G band to an intensity I_{D} of a D band is 1.1 or more. A large ratio I_{G}/I_{D} indicates that the fibrous carbon material has few defects. A small ratio I_{G}/I_{D} indicates that the fibrous carbon material has many defects. A fibrous carbon material having fewer defects is considered to exhibit high chemical stability.

### (Technique 6)

The fluoride ion secondary battery according to any one of Techniques 1 to 5, wherein the negative electrode active material includes at least one selected from the group consisting of lanthanum, cerium, magnesium, sodium, and yttrium. This configuration enables to provide a fluoride ion secondary battery with high energy density.

### (Technique 7)

The fluoride ion secondary battery according to any one of Techniques 1 to 6, wherein the negative electrode includes a negative electrode current collector and a negative electrode active material layer, the negative electrode active material layer includes the negative electrode active material and the fibrous carbon material, and a ratio M3/M1, expressed as a percentage, of mass M3 of the fibrous carbon material to mass M1 of the negative electrode active material layer is 6 mass% or more and 12 mass% or less. By appropriately adjusting the ratio M3/M1, the effect of suppressing side reactions is enhanced.

### (Technique 8)

The fluoride ion secondary battery according to any one of Techniques 1 to 7, wherein the negative electrode includes a negative electrode current collector and a negative electrode active material layer, the negative electrode active material layer includes the negative electrode active material and the fibrous carbon material, and a ratio M2/M1, expressed as a percentage, of mass M2 of the negative electrode active material to the mass M1 of the negative electrode active material layer is 40 mass% or more and 80 mass% or less. By appropriately adjusting the ratio M2/M1, the effect of suppressing side reactions is enhanced.

### (Technique 9)

The fluoride ion secondary battery according to any one of Techniques 1 to 8, wherein the electrolyte includes at least one material selected from the group consisting of a material represented by the following composition formula (1) and a material represented by the following composition formula (2),

BaₓCa_{y}F_{z} (1),

where 0.3 < x < 0.7, 0.3 < y < 0.7, and 1.5 < z < 2.5 are satisfied, and

CeₓSr_{y}F_{z} (2),

where 0.9 < x < 1, 0 < y < 0.1, and 2 < z < 3 are satisfied. BaₓCa_{y}F_{z} and CeₓSr_{y}F_{z}, are suitable for the negative electrode material of the present disclosure because both of them have high fluoride ion conductivity,.

### EXAMPLES

In the following Examples and Comparative Examples, a planetary ball mill "PL-7 manufactured by Fritsch GmbH" was used. The container and the balls of the planetary ball mill were made of silicon nitride.

### (Example 1)

A YF₃ powder (manufactured by Sigma-Aldrich Corporation) was milled using the planetary ball mill. This yielded a negative electrode active material of Example 1. The ball mill rotation speed during the milling process was 800 rpm. During the milling process, a 15-minute operation and a 5-minute rest were repeated 40 times.

### [Production of solid electrolyte]

A CaF₂ powder (manufactured by Kojundo Chemical Laboratory Co., Ltd.) and a BaF₂ powder (manufactured by Kojundo Chemical Laboratory Co., Ltd.) were mixed in a molar ratio of CaF₂ : BaF₂ = 1:1 to prepare a mixture. The mixture was milled using a planetary ball mill. This yielded a solid electrolyte represented by a composition formula Ca_{0.5}Ba_{0.5}F₂ (hereinafter referred to as BCF). The ball mill rotation speed during the milling process was 800 rpm. During the milling process, a 60-minute operation and a 5-minute rest were repeated 10 times.

### [Production of negative electrode material]

The BCF and a carbon nanotube (CNT) as an electroconductive additive were mixed at a mass ratio of BCF:CNT = 4:1 to prepare a mixture. The mixture was milled using a planetary ball mill. The ball mill rotation speed during the milling process was 800 rpm. During the milling process, a 30-minute operation and a 5-minute rest were repeated 20 times. To the obtained material, the negative electrode active material of Example 1 was added and dispersed. This yielded the negative electrode material of Example 1. A mass ratio of the negative electrode active material to the negative electrode material of Example 1 was 55%. As the carbon nanotube, a single-walled carbon nanotube (manufactured by Zeon Corporation) was used.

### (Example 2)

A negative electrode material of Example 2 was obtained by the same method as in Example 1, except that a multi-walled carbon nanotube (manufactured by Tokyo Chemical Industry Co., Ltd.) was used in place of a single-walled carbon nanotube.

### (Comparative Example 1)

A negative electrode material of Comparative Example 1 was obtained by the same method as in Example 1, except that acetylene black (manufactured by Denka Company Limited) was used in place of a single-walled carbon nanotube.

### (Example 3)

A NaF powder (manufactured by Sigma-Aldrich Corporation) and a CeF₃ powder (manufactured by Sigma-Aldrich Corporation) were mixed in a molar ratio of 1:1 to prepare a mixture. The mixture was milled using a planetary ball mill. This yielded the negative electrode active material of Example 3. The ball mill rotation speed during the milling process was 300 rpm. During the milling process, a 15-minute operation and a 5-minute rest were repeated 40 times.

### [Production of negative electrode material]

A negative electrode material of Example 3 was obtained by using the negative electrode active material of Example 3 in place of the negative electrode active material of Example 1. The mass ratio of the negative electrode active material to the negative electrode material of Example 3 was 60%.

### (Example 4)

A negative electrode material of Example 4 was obtained by the same method as in Example 3, except that a multi-walled carbon nanotube (manufactured by Tokyo Chemical Industry Co., Ltd.) was used in place of a single-walled carbon nanotube.

### (Comparative Example 2)

A negative electrode material of Comparative Example 2 was obtained by the same method as in Example 3, except that acetylene black (manufactured by Denka Company Limited) was used in place of a single-walled carbon nanotube.

### (Example 5)

A LaF₃ powder (manufactured by Sigma-Aldrich Corporation) was milled using the planetary ball mill. This yielded a negative electrode active material of Example 5. The ball mill rotation speed during the milling process was 300 rpm. During the milling process, a 15-minute operation and a 5-minute rest were repeated 40 times.

### [Production of negative electrode material]

A negative electrode material of Example 5 was obtained by using the negative electrode active material of Example 5 in place of the negative electrode active material of Example 1. The mass ratio of the negative electrode active material to the negative electrode material of Example 5 was 65%.

### (Example 6)

A negative electrode material of Example 6 was obtained by the same method as in Example 5, except that a multi-walled carbon nanotube (manufactured by Tokyo Chemical Industry Co., Ltd.) was used in place of a single-walled carbon nanotube.

### (Comparative Example 3)

A negative electrode material of Comparative Example 3 was obtained by the same method as in Example 5, except that acetylene black (manufactured by Denka Company Limited) was used in place of a single-walled carbon nanotube.

### [Production of positive electrode buffer material]

A PbF₂ powder (manufactured by Kojundo Chemical Laboratory Co., Ltd.) and a SnF₂ powder (manufactured by Kojundo Chemical Laboratory Co., Ltd.) were mixed at a mass ratio of PbF₂ : SnF₂ = 15:7 to prepare a mixture. The mixture was milled using a planetary ball mill. This yielded a compound represented by a composition formula Pb_{0.58}Sn_{0.42}F₂ (hereinafter referred to as PSF). The ball mill rotation speed during the milling process was 600 rpm. During the milling process, a 15-minute operation and a 5-minute rest were repeated 40 times.

The PSF and acetylene black (manufactured by Denka Company Limited) as an electroconductive additive were mixed at a mass ratio of PSF : acetylene black = 14:1 to prepare a mixture. The mixture was milled using a planetary ball mill. This yielded a positive electrode buffer material including the PSF and the acetylene black. The ball mill rotation speed during the milling process was 600 rpm. During the milling process, a 15-minute operation and a 5-minute rest were repeated 12 times.

### [Production of fluoride ion secondary battery]

4 mg of the negative electrode material of Example 1, 50 mg of the BCF, 50 mg of the positive electrode buffer material, a lead foil as a positive electrode active material (manufactured by Nilaco Corporation, thickness: 200 µm) and an aluminum foil as a positive current collector (manufactured by Nilaco Corporation, thickness: 10 µm) were placed in this order into a cylindrical mold with a diameter of 10 mm, and pressed. A platinum foil as a negative current collector (manufactured by Nilaco Corporation, thickness: 20 µm) was placed on the layer of the negative electrode material. This yielded a fluoride ion secondary battery of Example 1. Using the negative electrode materials of Example 2 to 6 and Comparative Examples 1 to 3, fluoride ion secondary batteries for Examples 2 to 6 and Comparative Examples 1, to 3 were obtained by the same method as in Example 1.

### [Measurement of initial discharge capacity of fluoride ion secondary battery]

The initial discharge capacity of the fluoride ion secondary batteries of Examples and Comparative Examples was measured using a potentiogalvanostat (SP300 manufactured by Bio-Logic SAS). The fluoride ion secondary battery was placed in a vacuum thermostatic chamber at 150°C, and constant current charge was performed at a current of 40 µA and at a cut-off voltage of -2.7 V. Later, constant current discharge was performed at a current of 40 µA and at a cut-off voltage of -0.05 V.

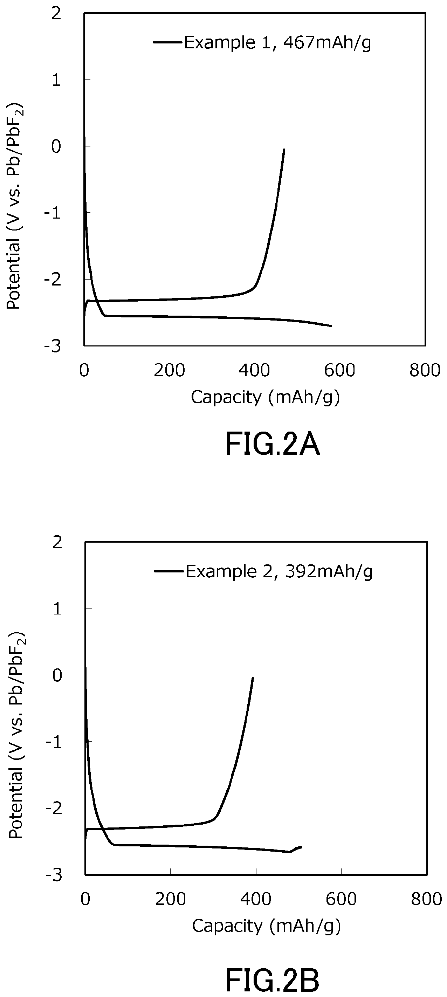

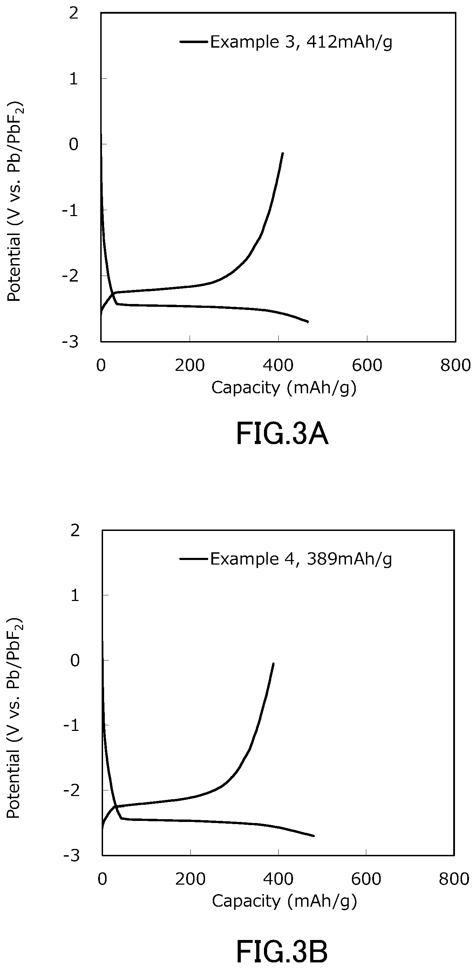

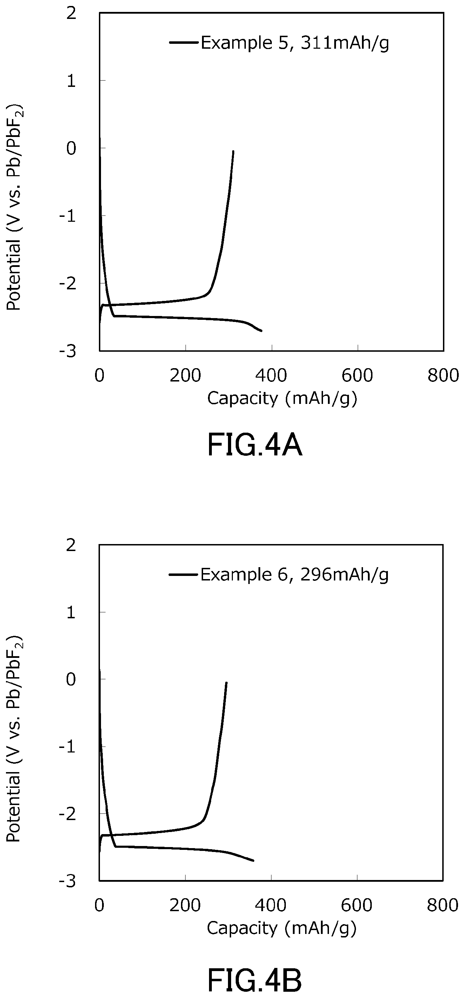

FIG. 2A to FIG. 2C are graphs showing the charge and discharge curves for the first cycle of the fluoride ion secondary batteries of Example 1, Example 2, and Comparative Example 1, respectively. FIG. 3A to FIG. 3C are graphs showing the charge and discharge curves for the first cycle of the fluoride ion secondary batteries of Example 3, Example 4, and Comparative Example 2, respectively. FIG. 4A to FIG. 4C are graphs showing the charge and discharge curves for the first cycle of the fluoride ion secondary batteries of Example 5, Example 6, and Comparative Example 3, respectively. The horizontal axis of the graph represents the capacity per unit mass of the negative electrode active material, indicating the amount of electricity charged or discharged. The vertical axis of the graph represents the potential of the negative electrode referenced to the redox equilibrium potential between lead and lead fluoride. The relation of the standard hydrogen electrode potential and the redox equilibrium potential between lead and lead fluoride is: 0 V vs. Pb/PbF₂ = -0.44 V vs. SHE.

As shown in FIG. 2A, the initial discharge capacity of the fluoride ion secondary battery of Example 1 was 467 mAh/g. The initial discharge capacity of the fluoride ion secondary battery of Example 1 was sufficiently high. The theoretical capacity of the fluoride ion secondary battery of Example 1 is 551 mAh/g.

As shown in FIG. 2B, the initial discharge capacity of the fluoride ion secondary battery of Example 2 was 392 mAh/g. In Example 2, a potential step was observed around 480 mAh/g on the charge curve. This step indicates that side reactions occurred at the negative electrode during charge of the fluoride ion secondary battery. Although the initial discharge capacity of the fluoride ion secondary battery of Example 2 was high, it was lower than the initial discharge capacity of Example 1.

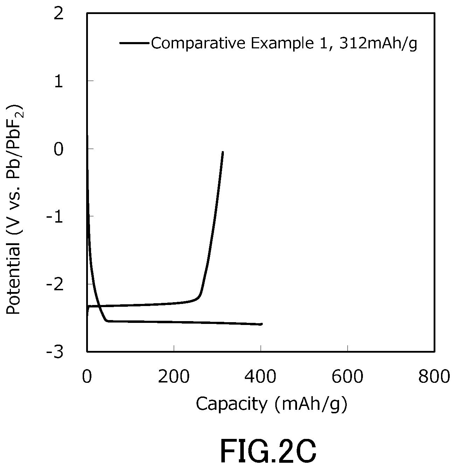

As shown in FIG. 2C, the initial discharge capacity of the fluoride ion secondary battery of Comparative Example 1 was 312 mAh/g. Compared to Examples 1 and 2, the initial discharge capacity of the fluoride ion secondary battery of Comparative Example 1 was lower. In Comparative Example 1, a sharp increase in voltage was observed around 400 mAh/g on the charge curve, and thus, charge was manually stopped.

As shown in FIG. 3A, the initial discharge capacity of the fluoride ion secondary battery of Example 3 was 412 mAh/g. The initial discharge capacity of the fluoride ion secondary battery of Example 3 was sufficiently high. The theoretical capacity of the fluoride ion secondary battery of Example 3 is the sum of the theoretical capacity of NaF and the theoretical capacity of CeF₃, namely, 112 + 337 = 449 mAh/g.

As shown in FIG. 3B, the initial discharge capacity of the fluoride ion secondary battery of Example 4 was 389 mAh/g. Although the initial discharge capacity of the fluoride ion secondary battery of Example 4 was high, it was lower than the initial discharge capacity of Example 3.

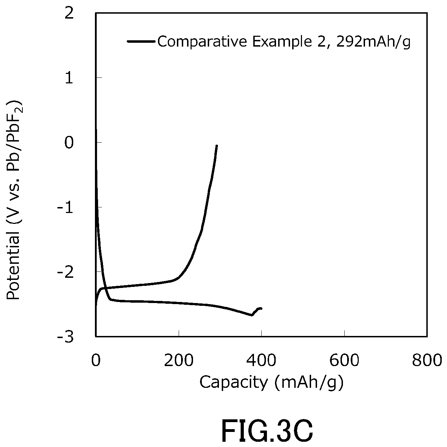

As shown in FIG. 3C, the initial discharge capacity of the fluoride ion secondary battery of Comparative Example 2 was 292 mAh/g. Compared to Example 3 and Example 4, the initial discharge capacity of the fluoride ion secondary battery in Comparative Example 2 was lower. In Comparative Example 2, a sharp increase in voltage was observed around 380 mAh/g on the charge curve, and thus, charge was manually stopped.

As shown in FIG. 4A, the initial discharge capacity of the fluoride ion secondary battery of Example 5 was 311 mAh/g. The initial discharge capacity of the fluoride ion secondary battery of Example 5 was sufficiently high. Here, the theoretical capacity of the fluoride ion secondary battery of Example 5 is 410 mAh/g.

As shown in FIG. 4B, the initial discharge capacity of the fluoride ion secondary battery of Example 6 was 296 mAh/g. Although the initial discharge capacity of the fluoride ion secondary battery of Example 6 was high, it was lower than the initial discharge capacity of Example 4.

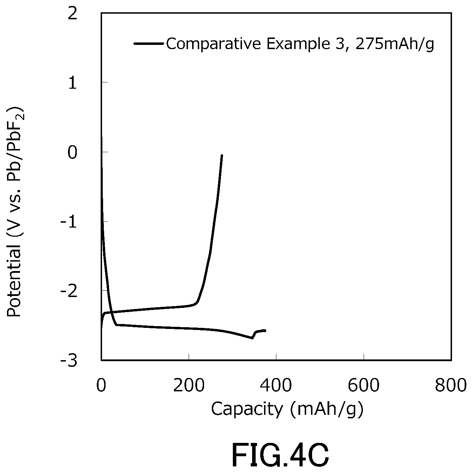

As shown in FIG. 4C, the initial discharge capacity of the fluoride ion secondary battery of Comparative Example 3 was 275 mAh/g. Compared to Example 5 and Example 6, the initial discharge capacity of the fluoride ion secondary battery of Comparative Example 3 was lower. In Comparative Example 3, a sharp increase in voltage was observed around 350 mAh/g on the charge curve, and thus, charge was manually stopped.

Table 1 shows the ratio of the initial discharge capacity to the theoretical capacity for Examples 1 to 6 and Comparative Examples 1 to 3. In any of Examples 1 to 6, the ratio of the initial discharge capacity to the theoretical capacity was improved compared to Comparative Examples 1 to 3 in which the same type of negative electrode active materials were used.

**[Table 1]**

| | Negative electrode active material | Ratio of initial discharge capacity to theoretical capacity (%) |
|---|---|---|
| Example 1 | YF₃ | 84.8 |
| Example 2 | YF₃ | 71.1 |
| Comparative Example 1 | YF₃ | 56.6 |
| Example 3 | NaF/CeF₃ | 91.8 |
| Example 4 | NaF/CeF₃ | 86.6 |
| Comparative Example 2 | NaF/CeF₃ | 70.9 |
| Example 5 | LaF₃ | 75.9 |
| Example 6 | LaF₃ | 72.2 |
| Comparative Example 3 | LaF₃ | 67.1 |

### (Reference Example 1 and Reference Example 2)

The initial discharge capacity of the fluoride ion secondary batteries of Reference Example 1 and Reference Example 2 was measured using a potentiogalvanostat (SP300 manufactured by Biologics, Inc.). For a fluoride ion secondary battery of Reference Example 1, the fluoride ion secondary battery of Example 5 was used. For a fluoride ion secondary battery of Reference Example 2, the fluoride ion secondary battery of Comparative Example 3 was used. The fluoride ion secondary batteries of Reference Example 1 and Reference Example 2 were placed in a vacuum thermostatic chamber at 150°C and charged at a constant current of 40 µA and at a cut-off voltage of -2.108 V (= -2.49 V vs. SHE). And then, the fluoride ion secondary batteries were discharged at a constant current of 40 µA and at a cut-off voltage of -0.05 V. The results are shown in Table 2.

**[Table 2]**

| | Discharge capacity (mAh/g) |
|---|---|
| Reference Example 1 (Example 5) | 15.1 |
| Reference Example 2 (Comparative Example 3) | 15.0 |

As shown in Table 2, in the case where charge was performed at a cut-off voltage of -2.108 V, any difference in the initial discharge capacity was not observed. That is, when the potential of the negative electrode was positive, no side reactions occurred regardless of the type of electroconductive additive.

### [Raman spectroscopy analysis]

Raman spectroscopy analysis was performed on the negative electrode material of Example 1 and the negative electrode material of Comparative Example 1. The ratio I_{G}/I_{D} of an intensity I_{G} of a G-band to an intensity I_{D} of a D-band was calculated from the obtained spectra. The results are shown in Table 3.

**[Table 3]**

| | I_{G}/I_{D} |
|---|---|
| Example 1 | 1.1414 |
| Comparative Example 1 | 1.0528 |

The ratio I_{G}/I_{D} for the negative electrode material of Example 1 was 1.1 or more. The ratio I_{G}/I_{D} for the negative electrode material of Comparative Example 1 was less than 1.1. That is, the disorder and defects in the graphite structure of the negative electrode material of Example 1 were fewer than the disorder and defects in the graphite structure of the negative electrode material of Comparative Example 1.

### INDUSTRIAL APPLICABILITY

The technique disclosed herein is useful for fluoride ion secondary batteries.

## Claims

1. A fluoride ion secondary battery, comprising:
a positive electrode;
a negative electrode; and
an electrolyte disposed between the positive electrode and the negative electrode, wherein
the negative electrode comprises a negative electrode active material and a fibrous carbon material, and
a potential of the negative electrode at an end of charge is more negative than -2.5 V vs. a standard hydrogen electrode.

2. The fluoride ion secondary battery according to claim 1, wherein
the fibrous carbon material comprises a carbon nanotube.

3. The fluoride ion secondary battery according to claim 2, wherein
the carbon nanotube comprises a single-walled carbon nanotube.

4. The fluoride ion secondary battery according to claim 1, wherein
the potential of the negative electrode at an end of charge is more negative than -3.082 V vs. a standard hydrogen electrode.

5. The fluoride ion secondary battery according to claim 1, wherein
in analyzing the fibrous carbon material by Raman spectroscopy, a ratio of an intensity I_{G} of a G band to an intensity I_{D} of a D band is 1.1 or more.

6. The fluoride ion secondary battery according to claim 1, wherein
the negative electrode active material comprises at least one selected from the group consisting of lanthanum, cerium, magnesium, sodium, and yttrium.

7. The fluoride ion secondary battery according to claim 1, wherein
the negative electrode comprises a negative electrode current collector and a negative electrode active material layer,
the negative electrode active material layer comprises the negative electrode active material and the fibrous carbon material, and
a ratio M3/M1, expressed as a percentage, of mass M3 of the fibrous carbon material to mass M1 of the negative electrode active material layer is 6 mass% or more and 12 mass% or less.

8. The fluoride ion secondary battery according to claim 7, wherein
a ratio M2/M1, expressed as a percentage, of mass M2 of the negative electrode active material to the mass M1 of the negative electrode active material layer is 40 mass% or more and 80 mass% or less.

9. The fluoride ion secondary battery according to claim 1, wherein
the electrolyte comprises at least one material selected from the group consisting of a material represented by the following composition formula (1) and a material represented by the following composition formula (2),
BaₓCa_{y}F_{z} (1),
where 0.3 < x < 0.7, 0.3 < y < 0.7, and 1.5 < z < 2.5 are satisfied, and
CeₓSr_{y}F_{z} (2),
where 0.9 < x < 1, 0 < y < 0.1, and 2 < z < 3 are satisfied.
